# EUROPEAN PATENT APPLICATION

(11) **EP 3 170 976 A1**
(43) Date of publication of application: **24.05.2017**
(21) Application number: 16189290.6
(22) Date of filing: 16.09.2016
(51) Int. Cl.: F01D 5/18

(54) **GAS TURBINE ENGINE COMPONENT WITH A PLATFORM COOLING CORE CIRCUIT, CORRESPONDING COOLING SYSTEM AND GAS TURBINE ENGINE**

(30) Priority: 23.11.2015 US 201514949570
(71) Applicant: United Technologies Corporation, Farmington, CT 06032 (US)
(72) Inventor: LEWIS, Scott D., Vernon, CT Connecticut 06066 (US)
(74) Representative: Leckey, David Herbert

(57) **Abstract**

A gas turbine engine component is provided. The gas turbine engine component comprises a platform (62), a platform cooling core circuit (94; 194) inside of the platform (62), an airfoil (46; 64) extending from the platform (62), and a plurality of one-wall pedestals (96) inside the platform cooling core circuit (94; 194). The plurality of one-wall pedestals (96) partially extend from only a first endwall (97) of the platform cooling core circuit (94; 194) toward a second endwall (101) of the platform cooling core circuit (94; 194). The gas turbine engine (20) and a system for cooling an airfoil platform (62) of a gas turbine engine component are also provided.

## Description

### FIELD

The present disclosure relates to gas turbine engines, and more specifically, to airfoil platform cooling core circuits with one-wall heat transfer pedestals for a gas turbine engine component and systems for cooling an airfoil platform.

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Airfoils used on blades and static vanes in the turbine section are exposed to high temperature, high-speed exhaust gas flow. The airfoils extend from platforms that may include a cooling core circuit for cooling the platform as the temperature of the exhaust gas flow is generally higher than the melting temperature of the platform material. There is a pressure drop between the cooling core circuit inlet and cooling core circuit outlet of the platform cooling core circuit. The greater the pressure drop, the greater the ability to generate high heat transfer coefficients to cool the platform. The cooling core circuit may include augmentation features to further increase the heat transfer coefficients. Such features include pin fins, trip strips, pedestals, guide vanes, etc. that use the pressure drop to alter the flow characteristic of the cooling fluid through the platform cooling core circuit, thereby managing stress, gas flow, and heat transfer. Conventional pedestals are two-wall pedestals that span the entire distance between two walls of the platform cooling core circuit. Two-wall pedestals need a significant pressure drop to achieve the desired high heat transfer coefficients at the two walls. Where the pressure drop is limited, such as in some cooling scheme designs, heat transfer coefficients may be lower and thus improvements in heat transfer efficiency of the augmentation features becomes more important.

### SUMMARY

A gas turbine engine component is provided, according to various embodiments. The gas turbine engine component comprises a platform, a platform cooling core circuit inside of the platform, an airfoil extending from the platform, and a plurality of one-wall pedestals inside the platform cooling core circuit. The plurality of one-wall pedestals partially extend from only a first endwall of the platform cooling core circuit toward a second endwall of the platform cooling core circuit.

A gas turbine engine is provided, according to various embodiments. The gas turbine engine comprises a compressor section, a turbine section downstream from the compressor section, and a gas turbine engine component positioned within at least one of the compressor section and the turbine section. The gas turbine engine component comprises a platform, a platform cooling core circuit inside of the platform, an airfoil extending from the platform, and a plurality of one-wall pedestals inside the platform cooling core circuit. The plurality of one-wall pedestals partially extend from only a first endwall of the platform cooling core circuit toward a second endwall of the platform cooling core circuit.

A system is provided for cooling an airfoil platform of a gas turbine engine component, according to various embodiments. The system comprises a plurality of one-wall pedestals inside a platform cooling core circuit of the airfoil platform. The plurality of one-wall pedestals extends from only a first endwall of the platform cooling core circuit. The first endwall is proximate to a gas path surface of the platform. The plurality of one-wall pedestals extends only partially between the first endwall and a second endwall of the platform cooling core circuit. The second endwall is proximate to a non-gas path surface of the platform.

In any of the foregoing embodiments, the first endwall comprises a radially outer endwall and the second endwall comprises a radially inner endwall. The radially outer endwall is proximate a gas path surface of the platform and the radially inner endwall is proximate a non-gas path surface of the platform. The airfoil has a pressure side and a suction side and the platform cooling core circuit is adjacent to at least one of the pressure side of the airfoil or the suction side of the airfoil. The plurality of one-wall pedestals are inside the platform cooling core circuit positioned adjacent to at least one of the pressure side of the airfoil or adjacent to the suction side of the airfoil. The platform cooling core circuit is formed near a leading edge of the platform on at least one of the suction side or the pressure side of the airfoil. The gas turbine engine component comprises at least one of a rotor blade or a stator vane. The gas turbine engine component further comprises a main body cooling core circuit that extends at least partially inside the airfoil. The platform cooling core circuit is fed with a cooling fluid from either the main body cooling core circuit or a pocket located radially inboard from the platform, between a gas path surface and a non-gas path surface of the platform. The plurality of one-wall pedestals extends between about 50% to about 95% of a radial height of the platform cooling core circuit. The plurality of one-wall pedestals have a pedestal shape comprising a round pedestal shape, a square pedestal shape, a triangular pedestal shape, an oval pedestal shape, or a racetrack pedestal shape.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a schematic, cross-sectional view of a gas turbine engine;
FIG. 2 illustrates a rotor blade that can be incorporated in a gas turbine engine;
FIG. 3 is a view taken through section A-A of FIG. 2 and illustrates an exemplary cooling scheme of the rotor blade, an airfoil platform of the rotor blade including a platform cooling core circuit with a plurality of one-wall pedestals, according to various embodiments;
FIG. 4 illustrates another exemplary cooling scheme of the rotor blade including a platform cooling core circuit with a plurality of one-wall pedestals, according to various embodiments;
FIG. 5 is a schematic top view of an exemplary gas turbine engine component (an exemplary rotor blade), illustrating a plurality of one-wall pedestals in a platform cooling circuit adjacent a pressure side and a platform cooling circuit adjacent a suction side of the of the airfoil platform; and
FIG. 6 illustrates a system for cooling an airfoil platform of a gas turbine engine component using the plurality of one-wall pedestals in a platform cooling circuit of the airfoil platform, according to various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with the present inventions and the teachings herein. Thus, the detailed description herein is presented for purposes of illustration only and not of limitation. The scope of the present inventions is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Furthermore, any reference to singular includes plural embodiments, and any reference to more than one component or step may include a singular embodiment or step.

Various embodiments are directed to airfoil platform cooling core circuits with one-wall heat transfer pedestals for a gas turbine engine component and systems for cooling an airfoil platform. Various embodiments enable improved heat transfer coefficients in areas of the airfoil platform exposed to hot gaspath air, while using a limited pressure drop to achieve the heat transfer coefficients.

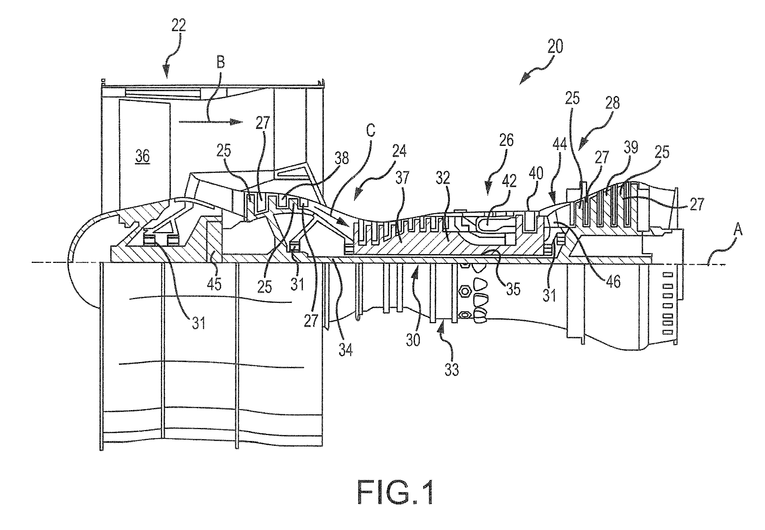

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 31. It should be understood that various bearing systems 31 at various locations may alternatively or additionally be provided and the location of bearing systems 31 may be varied as appropriate to the application.

The low speed spool 30 generally includes an inner shaft 34 that interconnects a fan 36, a first (or low) pressure compressor 38 and a first (or low) pressure turbine 39. The inner shaft 34 is connected to the fan 36 through a speed change mechanism, which in exemplary gas turbine engine 20 is illustrated as a geared architecture 45 to drive the fan 36 at a lower speed than the low speed spool 30. The high speed spool 32 includes an outer shaft 35 that interconnects a second (or high) pressure compressor 37 and a second (or high) pressure turbine 40. A combustor 42 is arranged in exemplary gas turbine 20 between the high pressure compressor 37 and the high pressure turbine 40. A mid-turbine frame 44 of the engine static structure 36 is arranged generally between the high pressure turbine 40 and the low pressure turbine 39. The mid-turbine frame 44 further supports bearing systems 31 in the turbine section 28. The inner shaft 34 and the outer shaft 35 are concentric and rotate via bearing systems 31 about the engine central longitudinal axis A which is collinear with their longitudinal axes.

The core airflow is compressed by the low pressure compressor 38 then the high pressure compressor 37, mixed and burned with fuel in the combustor 42, then expanded over the high pressure turbine 40 and low pressure turbine 39. The mid-turbine frame 44 includes airfoils 46 which are in the core airflow path C. The turbines 39, 40 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than about ten (10), the geared architecture 45 is an epicyclic gear train, such as a planetary gear system or other gear system, with a gear reduction ratio of greater than about 2.3 and the low pressure turbine 39 has a pressure ratio that is greater than about five. In one disclosed embodiment, the engine 20 bypass ratio is greater than about ten (10:1), the fan diameter is significantly larger than that of the low pressure compressor 38, and the low pressure turbine 39 has a pressure ratio that is greater than about five 5:1. Low pressure turbine 39 pressure ratio is pressure measured prior to inlet of low pressure turbine 39 as related to the pressure at the outlet of the low pressure turbine 39 prior to an exhaust nozzle. The geared architecture 45 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 create or extract energy (in the form of pressure) from the core airflow that is communicated through the gas turbine engine 20 along the core flow path C. The vanes 27 direct the core airflow to the blades 25 to either add or extract energy.

Various components of the gas turbine engine 20, including but not limited to the airfoil and platform sections of the blades 25 and vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may use dedicated internal cooling circuits to cool the parts during engine operation. This disclosure relates to gas turbine engine components having platform cooling core circuits.

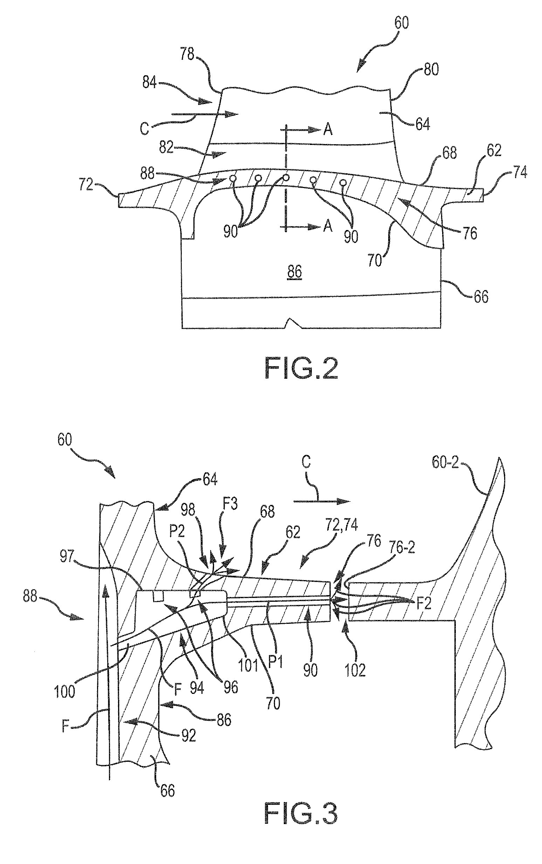

Figure 2 illustrates a rotor blade 60 that can be incorporated into a gas turbine engine, such as the compressor section 24 or the turbine section 28 of the gas turbine engine 20 of FIG. 1. The rotor blade 60 may be part of a rotor assembly that includes a plurality of rotor blades circumferentially disposed about the engine centerline longitudinal axis A and configured to rotate to extract energy from the core airflow of the core flow path C.

The rotor blade 60 includes a platform 62, an airfoil 64, and a root 66. In various embodiments, the airfoil 64 extends from a gas path surface 68 of the platform 62 and the root 66 extends from a non-gas path surface 70 of the platform 62. The gas path surface 68 is exposed to the hot combustion gases of the core flow path C, whereas the non-gas path surface 70 is remote from the core flow path C. The root 66 is configured to attach the rotor blade 60 to a rotor assembly, such as within a slot formed in a rotor assembly. The root 66 includes a neck 86, which is, in various embodiments, an outer wall of the root 66.

The platform 62 axially extends between a platform leading edge 72 and a platform trailing edge 74 and circumferentially extends between a first mate face 76 and a second mate face. The airfoil 64 axially extends between a leading edge 78 and a trailing edge 80 and circumferentially extends between a pressure side 82 and a suction side 84.

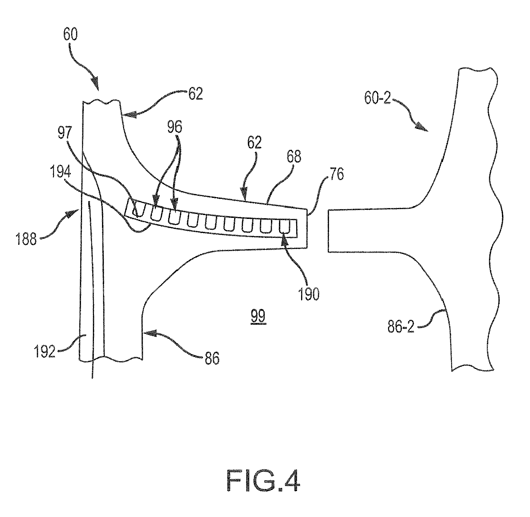

The rotor blade 60 may include a cooling scheme 88 that includes one or more cooling core circuits (also known as cooling passages) and cooling holes 90 (shown as mate face cooling holes in this example) formed in the airfoil 64 and platform 62 of the rotor blade 60. Exemplary cooling schemes are described in greater detail below with respect to FIGS. 3 and 4. The platform cooling core circuits may be formed through additive manufacturing.

FIG. 3 illustrates an exemplary cooling scheme 88 that can be incorporated into a rotor blade 60. The cooling scheme 88 includes a main body cooling core circuit 92 (i.e., a first cooling core circuit or cavity) and a platform cooling core circuit 94 (i.e., a second cooling core circuit or cavity). Of course, additional cooling core circuits may be formed inside of the rotor blade 60. The main body cooling core circuit 92 may extend through the root 66 and at least a portion of the airfoil 64.

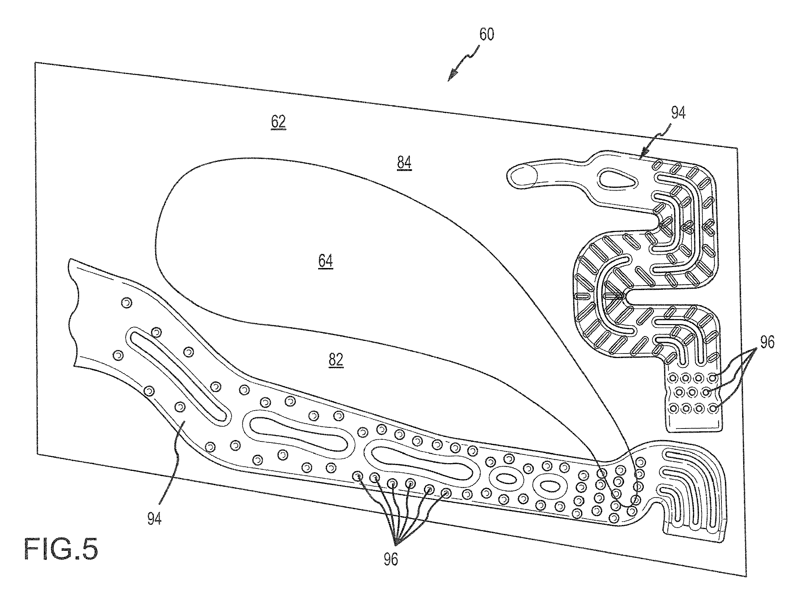

The main body cooling core circuit 92 can communicate the cooling fluid F, such as compressor bleed airflow, to cool the airfoil 64 and/or other sections of the rotor blade 60. The platform cooling core circuit 94 may be formed within the platform 62 and may be disposed adjacent to the pressure side 82 of the airfoil, the suction side 84 of the airfoil 64, or both (such as shown in FIG. 5). In various embodiments, the platform cooling core circuit 94 may be a pocket formed near the platform leading edge 72 of the platform 62. In further embodiments, the platform cooling core circuit 94 may be a pocket formed near the platform trailing edge 74. The platform cooling core circuit 94 is radially disposed between the gas path surface 68 and the non-gas path surface 70 and circumferentially disposed between the main body cooling core circuit 92 and the mate face 76, in various embodiments.

The cooling scheme 88 may additionally include a plurality of cooling holes 90, 98 that are drilled or otherwise manufactured into the rotor blade 60. For example, a first cooling hole 90 may extend between the mate face 76 and the platform cooling core circuit 94. The first cooling hole 90 may be referred to as a mate face cooling hole. A second cooling hole 98 may extend between the gas path surface 68 of the platform 62 and the platform cooling core circuit 94. The second cooling hole 98 may be referred to as a platform cooling hole. It should be understood that additional cooling holes could be disposed through both the platform 62 and the mate face 76. The platform cooling core circuit 94 may be fed with a portion of the cooling fluid F from the main body cooling core circuit 92. A passage 100 may fluidly connect the platform cooling core circuit 94 with the main body cooling core circuit 92.

Once inside the platform cooling core circuit 94, the cooling fluid F may circulate around plurality of one-wall pedestals 96 according to various embodiments prior to being expelled through at least one of the cooling holes 90 or 98. A first portion P1 of the cooling fluid F may be expelled through the first cooling hole 90 to provide a layer of film cooling air F2 at the mate face 76. The layer of film cooling air F2 expelled from the first cooling hole 90 discourages hot combustion gases from the core flow path C from ingesting into a mate face gap 102 that extends between the mate face 76 of the rotor blade 60 and a mate face 76-2 of a circumferentially adjacent rotor blade 60-2. A second portion P2 of the cooling fluid F may be expelled through the second cooling hole 98 to provide a layer of film cooling air F3 at the gas path surface 68 of the platform 62. It is to be understood that according to various embodiments, the cooling fluid may be expelled at any location. The cooling fluid may be expelled, for example, onto the mate face and/or the gaspath surface. While the use of cooling holes has been described and illustrated, it is to be understood that cooling holes may be eliminated if the radial height of the platform cooling circuit will not permit cooling holes. The shorter the radial height of the platform cooling circuit, the better the heat transfer due to the higher velocity of the cooling fluid.

FIG. 4 illustrates another cooling scheme 188 that may be incorporated into a rotor blade 60. In this disclosure, like reference numerals represent like features, whereas reference numerals modified by 100 are indicative of slightly modified features. Cooling scheme 188 includes a main body cooling core circuit 192 and a platform cooling core circuit 194. The platform cooling core circuit 194 may be fluidly isolated from the main body cooling core circuit 192. In other words, the platform cooling core circuit 194 is not fed by the main body cooling core circuit 192. Instead, the platform cooling core circuit 194 is fed with a cooling fluid F taken from a pocket 99 that extends radially inboard of the platform 62. In other words, the pocket 99 is located exterior from the rotor blade 60. The pocket 99 may extend between the neck 86 of the rotor blade 60 and a neck 86-2 of an adjacent rotor blade 60-2. Platform cooling core circuit 194 could be fed from any number of locations depending on the particular design and environment in which the component is to be utilized. A passage formed in the neck may connect the platform cooling core circuit 194 with the pocket 99. The cooling fluid is fed into the platform cooling core circuit 194, circulated over the one-wall pedestals 96, and may then be expelled through a cooling hole at a gas path surface 68 of the platform 62 and/or a mate face 76. There is a lower pressure drop in the cooling scheme 188, making it more difficult to achieve high heat transfer coefficients.

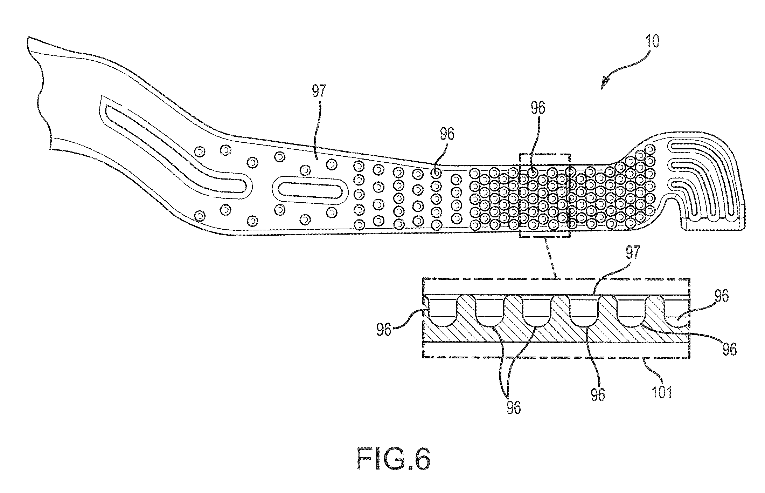

Still referring to FIG. 4 and now to FIGS. 5 and 6, according to various embodiments, the plurality of one-wall pedestals 96 are inside the platform cooling core circuit 94. The one-wall pedestals 96 may alter a flow characteristic of the cooling fluid circulated through the platform cooling core circuit 94 to create high heat transfer coefficients. For example, the one-wall pedestals may be placed within the platform cooling core circuit 94 to manage stress, gas flow and heat transfer. The one-wall pedestals according to various embodiments are referred to as "one-wall" pedestals as they extend from only one wall (the wall proximate the hot gas path surface (also referred to herein as "an outer endwall" or "first endwall" 97)) of the platform, and only partially extend from the outer endwall toward the opposing endwall of the platform (the wall proximate to the leakage air, i.e., "the inner endwall" or "second endwall" 101).

As the inner endwall 101 is proximate to the leakage air, it is not associated with as high of heat transfer coefficient as the outer endwall 97 that is proximate the hot gas path surface. Thermal loads and stresses on one-wall pedestals that extend from only the hot wall (the outer endwall) that is in proximity to the gaspath surface are significantly reduced because the hot and cold walls (the cold wall being the inner endwall 101 that is in proximity to the non-gaspath surface) are not connected, as would be the case with conventional two-wall pedestals. As noted previously, the one-wall pedestals that are connected only to the one hot wall do not benefit from a significant pressure drop for a high heat transfer coefficient. Moreover, the one-wall pedestals extending from the one hot wall do not have to share the pressure drop that does exist with pedestals that extend from the cold wall where a high heat transfer coefficient is not beneficial. The heat transfer levels achieved are proportional to the number of one-wall pedestals used, assuming the one-wall pedestals are all substantially the same size. It is to be understood that the one-wall pedestals do not have to be the same size or shape. The plurality of one-wall pedestals may have a variety of shapes. In the depicted embodiment, the one-wall pedestals are rounded with a dome shape but the one-wall pedestals may have other shapes. Exemplary non-limiting shapes for the one-wall pedestals include a pedestal shape that is round, square, triangular, oval or racetrack. Therefore, having more one-wall features on the hot wall, and extending from only the hot wall, provides even higher heat transfer on the hot wall and uses the available pressure drop effectively. The one-wall pedestals may extend between about 50% to about 90% of the radial height of the platform cooling core circuit. While FIGS. 5 and 6 illustrate one-wall pedestals in particular locations of platform core circuits, it is to be understood that the one-wall pedestals may be on any part of the hot wall. It is also to be understood that while particular distributions of one-wall pedestals are illustrated in FIGS. 5 and 6, the one-wall pedestals may be distributed in a manner other than as illustrated. For example, the one-wall pedestals may be distributed in a spaced apart manner or densely packed into a local area, no matter where the one-wall pedestals are located on the hot wall.

Still referring to FIG. 6, according to various embodiments, a system 10 for cooling the airfoil platform of the gas turbine engine component comprises the plurality of one-wall pedestals inside the platform cooling core circuit of the airfoil platform, wherein the plurality of one-wall pedestals extend from only the first endwall 97, the first endwall 97 proximate the gas path surface 68 of the platform, and wherein the plurality of one-wall pedestals extend only partially between the first endwall 97 and the second endwall of the platform cooling core circuit, the second endwall 101 proximate a non-gas path surface of the platform. The plurality of one-wall pedestals extend from all or a portion of the first endwall.

The one-wall pedestals enhance the heat transfer coefficient of the outer endwall from which they extend, but in doing so, uses only about one-third the pressure drop used by conventional two-wall pedestals. Thus, the one-wall pedestals provide high heat transfer coefficients without requiring a significant pressure drop.

The cooling scheme 188 has limited pressure drop because of the abundance of seals in the portion of the turbine blade around where the platform cooling core circuit is located. Too much leakage in the portion of the turbine blade is a performance penalty and no leakage means there is ingestion of gas path air. Therefore, while there is a desire to use the leakage air to create high heat transfer coefficients to cool the airfoil platform, there is also a desire to tend to minimize leakage air to avoid a performance penalty. The pressure is therefore reduced to tend to minimize leakage, but still large enough to create the high heat transfer coefficients where needed. The one-wall pedestals may be inside the platform cooling core circuit located on the suction side of the airfoil, the pressure side of the airfoil, or both. The one-wall pedestals may be used throughout the entire platform cooling core circuit or in a portion thereof without limitation as to where the portion is located.

Various embodiments enable increased heat transfer coefficients using a minimum pressure drop, thereby improving airfoil platform cooling particularly in cooling schemes where a pressure drop may be at a minimum. The pressure drop between the cooling core circuit inlet to the airfoil platform cooling core circuit with one-wall pedestals according to various embodiments and the cooling core circuit outlet therefrom is converted into high heat transfer coefficients, enabling improved airfoil platform cooling, particularly at the outer endwall that is exposed to the hot combustion gas.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A gas turbine engine component comprising:
a platform (62);
a platform cooling core circuit (94; 194) inside of the platform (62);
an airfoil (46; 64) extending from the platform (62); and
a plurality of one-wall pedestals (96) inside the platform cooling core circuit (94; 194), the plurality of one-wall pedestals (96) partially extending from only a first endwall (97) of the platform cooling core circuit (94; 194) toward a second endwall (101) of the platform cooling core circuit (94; 194).

2. The gas turbine engine component of claim 1, wherein the first endwall (97) comprises a radially outer endwall (97) and the second endwall (101) comprises a radially inner endwall (101), the radially outer endwall (97) proximate a gas path surface (68) of the platform (62) and the radially inner endwall (101) proximate a non-gas path surface (70) of the platform (62).

3. The gas turbine engine component of claim 1 or 2, wherein the airfoil (46; 64) has a pressure side (82) and a suction side (84) and the platform cooling core circuit (94; 194) is adjacent to at least one of the pressure side (82) of the airfoil (46; 64) or the suction side (84) of the airfoil (46; 64).

4. The gas turbine engine of claim 3, wherein the plurality of one-wall pedestals (96) are inside the platform cooling core circuit (94; 194) positioned adjacent to at least one of the pressure side (82) of the airfoil (46; 64) or adjacent to the suction side (84) of the airfoil (46; 64).

5. The gas turbine engine component of claim 3 or 4, wherein the platform cooling core circuit (94; 194) is formed near a leading edge (72) of the platform (62) on either the suction side (84) or the pressure side (82) of the airfoil (46; 64).

6. The gas turbine engine component of any preceding claim, wherein the plurality of one-wall pedestals (96) extend between about 50% to about 95% of a radial height of the platform cooling core circuit (94; 194).

7. The gas turbine engine component of any preceding claim, wherein the plurality of one- wall pedestals (96) have a pedestal shape comprising a round pedestal shape, a square pedestal shape, a triangular pedestal shape, an oval pedestal shape, or a racetrack pedestal shape.

8. The gas turbine engine component of any preceding claim, wherein the gas turbine engine component further comprises a main body cooling core circuit (92; 192) that extends at least partially inside the airfoil (46; 64).

9. The gas turbine engine component of claim 8, wherein the platform cooling core circuit (94; 194) is fed with a cooling fluid from either the main body cooling core circuit (92; 192) or a pocket (99) located radially inboard from the platform (62), between a/the gas path surface (68) and a/the non-gas path surface (70) of the platform (62).

10. A gas turbine engine (20) comprising:
a compressor section (24);
a turbine section (28) downstream from the compressor section (24); and
the gas turbine engine component of any preceding claim positioned within at least one of the compressor section (24) and the turbine section (28).

11. A system for cooling an airfoil platform (62) of a gas turbine engine component, the system comprising:
a plurality of one-wall pedestals (96) inside a platform cooling core circuit (94; 194) of the airfoil platform (62), the plurality of one-wall pedestals (96) extending from only a first endwall (97) of the platform cooling core circuit (94; 194), the first endwall (97) proximate to a gas path surface (68) of the platform (62); and
wherein the plurality of one-wall pedestals (96) extend only partially between the first endwall (97) and a second endwall (101) of the platform cooling core circuit (94; 194), the second endwall (101) proximate to a non-gas path surface (70) of the platform (62).

12. The system of claim 11, wherein an airfoil (46; 64) extends from the airfoil platform (62) and has a pressure side (82) and a suction side (84) and the platform cooling core circuit (94; 194) is adjacent to at least one of the pressure side (82) of the airfoil (46; 64) or the suction side (84) of the airfoil (46; 64).

13. The system of claim 11 or 12, wherein the plurality of one-wall pedestals (96) extend between about 50% to about 95% of a radial height of the platform cooling core circuit (94; 194).

14. The system of claim 11, 12 or 13, wherein the plurality of one-wall pedestals (96) have a pedestal shape comprising a round pedestal shape, a square pedestal shape, a triangular pedestal shape, an oval pedestal shape, or a racetrack pedestal shape.
